# EUROPÄISCHE PATENTSCHRIFT

(11) **EP 4 003 128 B1**
(45) Veröffentlichungstag und Bekanntmachung des Hinweises auf die Patenterteilung: **08.10.2025**
(21) Anmeldenummer: 20743999.3
(22) Anmeldetag: 16.07.2020
(51) Int. Cl.: A47L 15/22, A47L 15/00

(54) **HAUSHALTS-GESCHIRRSPÜLMASCHINE**
DOMESTIC DISHWASHER
LAVE-VAISSELLE À USAGE DOMESTIQUE

(30) Priorität: 31.07.2019 DE 102019211429
(43) Veröffentlichungstag der Anmeldung: 01.06.2022
(73) Patentinhaber: BSH Hausgeräte GmbH, 81739 München (DE)
(72) Erfinder: LUGERT, Michael, 89343 Jettingen-Scheppach (DE); EISENBART, Bernd, 89438 Holzheim (DE); OBLINGER, Werner, 89426 Mödingen (DE)
(86) Internationale Anmeldenummer: PCT/EP2020/070111
(87) Internationale Veröffentlichungsnummer: WO 2021/018612

(56) Entgegenhaltungen:
- EP-A1- 2 233 057
- EP-A1- 2 931 107
- CN-A- 104 284 620
- CN-A- 104 523 208
- CN-U- 206 408 407
- DE-A1- 102009 042 867
- US-A1- 2011 146 733
- US-A1- 2014 069 462

## Beschreibung

Die vorliegende Erfindung betrifft eine Haushalts-Geschirrspülmaschine.

Eine Geschirrspülmaschine umfasst einen Spülbehälter, in dem zu reinigendes Spülgut aufnehmbar ist. Zum Beaufschlagen des Spülguts mit Spülflotte und/oder Frischwasser kann innerhalb des Spülbehälters ein rotierender Sprüharm vorgesehen sein. Dieser Sprüharm kann entweder mit Hilfe des Drucks von aus Sprühdüsen des Sprüharms austretender Spülflotte und/oder Frischwasser oder mit Hilfe eines aktiven Antriebs, insbesondere mit Hilfe eines Elektromotors, angetrieben werden. Für den Fall, dass ein aktiver Antrieb vorgesehen ist, kann es bei einer Blockade des Sprüharms dazu kommen, dass der Antrieb überlastet wird. Außerdem kann es beim Handling mit dem Sprüharm beziehungsweise beim Handling in dem Spülbehälter dazu kommen, dass eine Kraft auf den Sprüharm aufgebracht wird, welche ebenfalls zu einer Überlastung führen kann. Beides gilt es zu verhindern.

Die US 2011/0146733 A1 beschreibt eine mit Hilfe eines Antriebssystems motorisierte Sprühvorrichtung für eine Geschirrspülmaschine. Das Antriebssystem umfasst eine Magnetkupplung. Die Magnetkupplung umfasst einen ersten Teil, der sich innerhalb einer Waschkammer der Geschirrspülmaschine befindet, und einen zweiten Teil, der sich außerhalb der Waschkammer befindet, so dass sich ein Motor und eine Abtriebswelle des Antriebssystems vollständig außerhalb der Waschkammer befinden.

Die DE 10 2009 042 867 A1 zeigt eine Geschirrspülmaschine mit einem oder mehreren Spülbereichen, in dem mindestens ein drehbarer Wascharm angeordnet ist. Die Geschirrspülmaschine umfasst eine Antriebsvorrichtung zum Antreiben eines drehbaren Wascharms, wobei die Antriebsvorrichtung mindestens eine Vorrichtung zum Erzeugen eines veränderbaren Magnetfelds zum Antrieb mindestens eines Wascharms umfasst.

Vor diesem Hintergrund besteht eine Aufgabe der vorliegenden Erfindung darin, eine verbesserte Haushalts-Geschirrspülmaschine zur Verfügung zu stellen.

Demgemäß wird eine Haushalts-Geschirrspülmaschine mit einem Spülbehälter, einem Sprüharm zum Beaufschlagen von in dem Spülbehälter aufgenommenem Spülgut mit Spülflotte und/oder Frischwasser, einer Antriebseinrichtung zum aktiven Antreiben des Sprüharms und einer Überlastsicherung vorgeschlagen. Die Überlastsicherung verbringt sich bei einer Blockade des Sprüharms selbsttätig von einem Kopplungszustand, in dem eine Kraftübertragung zwischen der Antriebseinrichtung und dem Sprüharm vorhanden ist, in einen Entkopplungszustand, in dem die Kraftübertragung zwischen der Antriebseinrichtung und dem Sprüharm unterbrochen ist. Die Überlastsicherung ist in Richtung des Kopplungszustands federvorgespannt.

Dadurch, dass die Überlastsicherung vorgesehen ist, kann zuverlässig verhindert werden, dass die Antriebseinrichtung überlastet wird. Hierdurch werden insbesondere Schäden an einem Antriebselement der Antriebseinrichtung oder an einem Getriebe derselben verhindert.

Der Spülbehälter ist vorzugsweise quaderförmig. Insbesondere umfasst der Spülbehälter einen Boden, eine dem Boden gegenüberliegend angeordnete Decke, eine Tür, eine der geschlossenen Tür gegenüberliegend angeordnete Rückwand sowie zwei Seitenwände. In dem Spülbehälter können Spülgutaufnahmen zum Aufnehmen des Spülguts vorgesehen sein. Beispielsweise sind ein Oberkorb, ein Unterkorb und eine Besteckschublade vorgesehen. Unterhalb des Unterkorbs kann der Sprüharm angeordnet sein. Der Sprüharm kann insbesondere drehbar an dem Boden gelagert sein. Alternativ kann der Sprüharm auch zwischen dem Unterkorb und dem Oberkorb angeordnet sein.

Unter dem "Beaufschlagen" des Spülguts mit Spülflotte und/oder Frischwasser ist vorliegend zu verstehen, dass das Spülgut mit Hilfe des Sprüharms mit Spülflotte und/oder Frischwasser benetzt wird. Unter "Spülflotte" kann vorliegend mit einem Reinigungsmittel versetztes Wasser zu verstehen sein. Die Spülflotte kann von dem Spülgut abgelöste Verschmutzungen umfassen. Darunter, dass der Sprüharm "aktiv angetrieben" ist, ist vorliegend zu verstehen, dass die Antriebseinrichtung ein Drehmoment auf den Sprüharm aufbringt. Unter einem "aktiven" Antreiben ist daher vorliegend insbesondere nicht zu verstehen, dass der Sprüharm mit Hilfe von Sprühdüsen in Rotation versetzt wird. Zum aktiven Antreiben eines Sprüharms umfasst die Antriebseinrichtung ein Antriebselement, insbesondere einen Elektromotor, der eine Antriebswelle in Rotation versetzt.

Der Sprüharm umfasst insbesondere einen aktiv angetriebenen Ausleger sowie einen drehbar an dem Ausleger gelagerten Sprüharmsatelliten. Der Sprüharmsatellit ist bevorzugt nicht aktiv angetrieben, sondern wird mit Hilfe von aus Sprühdüsen desselben ausströmender Spülflotte und/oder Frischwasser angetrieben. Unter einer "Blockade" des Sprüharms ist vorliegend insbesondere eine Blockade des zuvor erwähnten Auslegers zu verstehen. Unter der "Blockade" kann eine Blockade durch Spülgut aber auch durch eine Krafteinwirkung von außen, beispielsweise durch einen Benutzer, zu verstehen sein. Darunter, dass sich die Überlastsicherung "selbständig" von dem Kopplungszustand in den Entkopplungszustand und zurück verbringt, ist insbesondere zu verstehen, dass die Überlastsicherung ohne ein aktives Antriebselement und/oder Sensoren von dem Kopplungszustand in den Entkopplungszustand und umgekehrt verbracht werden kann. Die Antriebseinrichtung umfasst, wie zuvor erwähnt, bevorzugt das Antriebselement sowie mehrere Zahnräder, die von dem Antriebselement angetrieben werden. Eines der Zahnräder befindet sich mit dem Sprüharm, insbesondere mit dem Ausleger des Sprüharms, in Wirkverbindung. Hierzu kann der Ausleger eine Sprüharmverzahnung aufweisen, in die eines der Zahnräder formschlüssig eingreift.

Die Überlastsicherung ist in Richtung des Kopplungszustands federvorgespannt.

Darunter ist insbesondere zu verstehen, dass sich die Überlastsicherung selbsttätig von dem Entkopplungszustand in den Kopplungszustand verbringt. Das heißt umgekehrt, dass die Überlastsicherung von dem Kopplungszustand nur gegen eine Federkraft eines Federelements in den Entkopplungszustand verbracht werden kann. Das Federelement wiederum verbringt ohne eine äußere Kraft die Überlastsicherung von dem Entkopplungszustand zurück in den Kopplungszustand.

Gemäß einer weiteren Ausführungsform sind eine Drehachse einer Antriebswelle der Antriebseinrichtung und eine Drehachse des Sprüharms parallel zueinander und beabstandet voneinander angeordnet.

Darunter, dass die Drehachse des Sprüharms und die Drehachse der Antriebswelle "beabstandet voneinander" angeordnet sind, ist vorliegend insbesondere zu verstehen, dass die beiden Drehachsen um einen Abstand voneinander entfernt angeordnet sind. Das heißt, die Drehachse der Antriebswelle und die Drehachse des Sprüharms stimmen insbesondere nicht miteinander überein. Die Drehachse des Sprüharms ist dabei identisch mit einer Drehachse des Auslegers. Das heißt insbesondere, dass die Drehachse der Antriebswelle und die Drehachse des Auslegers parallel zueinander und beabstandet voneinander angeordnet sind.

Gemäß einer weiteren Ausführungsform ist die Überlastsicherung in einem Zahnrad der Antriebseinrichtung aufgenommen.

Hierdurch kann eine besonders kompakte Bauweise erzielt werden. Um die Überlastsicherung in dem Zahnrad aufzunehmen, ist dieses vorzugsweise hohl ausgebildet und weist einen Aufnahmebereich zum Aufnehmen der Überlastsicherung auf.

Gemäß einer weiteren Ausführungsform umfasst die Überlastsicherung ein Überlastelement, welches zur Kraftübertragung zwischen der Antriebseinrichtung und dem Sprüharm mit einem Gegeneingriffsabschnitt des Zahnrads in kraft- und/oder formschlüssigem Eingriff ist, wobei das Überlastelement bei einer Blockade des Sprüharms außer kraft- und/oder formschlüssigem Eingriff mit dem Gegeneingriffsabschnitt gerät, um die Überlastsicherung von dem Kopplungszustand in den Entkopplungszustand zu verbringen.

Eine formschlüssige Verbindung entsteht durch das Ineinander- oder Hintergreifen von mindestens zwei Verbindungspartnern. Eine kraftschlüssige Verbindung setzt eine Normalkraft auf die miteinander zu verbindenden Flächen voraus. Kraftschlüssige Verbindungen können durch Reibschluss verwirklicht werden. Die gegenseitige Verschiebung der Flächen ist verhindert, solange die durch die Haftreibung bewirkte Gegenkraft nicht überschritten wird. Der Gegeneingriffsabschnitt und das Überlastelement weisen entsprechende Steuerflächen auf, die reibungsbehaftet aufeinander abgleiten können. Der Eingriff des Überlastelements in das oder mit dem Gegeneingriffsabschnitt kann rein kraftschlüssig, rein formschlüssig oder kraft- und formschlüssig sein. Das Überlastelement umfasst vorzugsweise einen Eingriffsabschnitt mit den zuvor erwähnten Steuerflächen, wobei der Eingriffsabschnitt in den Gegeneingriffsabschnitt eingreifen kann. Der Gegeneingriffsabschnitt weist zu den Steuerflächen des Eingriffsabschnitts korrespondierende Steuerflächen auf.

Gemäß einer weiteren Ausführungsform bewegt sich das Überlastelement bei einer Blockade des Sprüharms linear entlang einer Drehachse des Zahnrads, um die Überlastsicherung von dem Kopplungszustand in den Entkopplungszustand zu verbringen.

Die Drehachse des Zahnrads entspricht vorzugsweise der zuvor erwähnten Drehachse der Antriebswelle des Antriebselements der Antriebseinrichtung. Bei dem Verbringen der Überlastsicherung von dem Entkopplungszustand in den Kopplungszustand bewegt sich das Überlastelement ebenfalls linear entlang der Drehachse.

Gemäß einer weiteren Ausführungsform umfasst die Überlastsicherung ein Gehäuseelement, welches mit dem Überlastelement verbunden ist, wobei zwischen dem Überlastelement und dem Gehäuseelement ein Federelement angeordnet ist.

Das Federelement ist insbesondere eine Zylinderfeder. Vorzugsweise ist das Federelement eine Druckfeder. Das Gehäuseelement und das Überlastelement sind vorzugsweise topfförmig ausgebildet. Dabei kann das Gehäuseelement zumindest abschnittsweise in dem Überlastelement aufgenommen sein. Das Gehäuseelement ist vorzugsweise formschlüssig mit dem Überlastelement verbunden. Hierzu können Rasthaken oder Schnapphaken vorgesehen sein.

Gemäß einer weiteren Ausführungsform bewegt das Federelement das Überlastelement bei einem Verbringen der Überlastsicherung von dem Kopplungszustand in den Entkopplungszustand entlang der Drehachse des Zahnrads linear gegenüber dem Gehäuseelement.

Hierzu können an dem Überlastelement und an dem Gehäuseelement entsprechende Führungen, beispielsweise in Form von Nuten und Rippen, vorgesehen sein.

Gemäß einer weiteren Ausführungsform ist das Federelement zumindest abschnittsweise in dem Überlastelement aufgenommen.

Das Federelement kann auch zumindest abschnittsweise in dem Gehäuseelement aufgenommen sein.

Gemäß einer weiteren Ausführungsform bewegt sich das Überlastelement bei einer Blockade des Sprüharms linear senkrecht zu einer Drehachse des Zahnrads, um die Überlastsicherung von dem Kopplungszustand in den Entkopplungszustand zu verbringen.

Wie zuvor erwähnt, ist die Drehachse des Zahnrads bevorzugt identisch mit der Drehachse der Antriebswelle des Antriebselements der Antriebseinrichtung. Durch die senkrechte Bewegung kann entlang der Drehachse ein besonders kompakter Aufbau der Überlastsicherung erreicht werden.

Gemäß einer weiteren Ausführungsform umfasst die Überlastsicherung ein in dem Zahnrad aufgenommenes Gehäuseelement, wobei zwischen dem Gehäuseelement und dem Überlastelement ein Federelement angeordnet ist.

Vorzugsweise ist das Gehäuseelement zylinderförmig. Das Gehäuseelement ist in dem Zahnrad aufgenommen. Das Überlastelement wiederum ist in dem Gehäuseelement aufgenommen.

Gemäß einer weiteren Ausführungsform bewegt das Federelement das Überlastelement bei einem Verbringen der Überlastsicherung von dem Kopplungszustand in den Entkopplungszustand senkrecht zu der Drehachse des Zahnrads linear gegenüber dem Gehäuseelement.

Vorzugsweise ist in dem Gehäuseelement ein Aufnahmeabschnitt vorgesehen, in dem das Überlastelement aufgenommen ist. Ferner ist ein Führungsabschnitt vorgesehen, in dem ein Führungszapfen des Überlastelements linear geführt ist. Hierdurch wird ein Verkippen des Überlastelements verhindert.

Gemäß einer weiteren Ausführungsform ist das Überlastelement zumindest abschnittsweise in dem Federelement aufgenommen.

Insbesondere ist das Federelement in dem Gehäuseelement aufgenommen. Bevorzugt ist ein, insbesondere zylinderförmiger, Basisabschnitt des Überlastelements in dem Federelement aufgenommen.

Gemäß einer weiteren Ausführungsform umfasst die Haushalts-Geschirrspülmaschine ferner eine Erfassungseinrichtung, mit deren Hilfe erfassbar ist, ob sich die Überlastsicherung in dem Kopplungszustand oder in dem Entkopplungszustand befindet.

Hierdurch ist es möglich, einem Benutzer die Information zu geben, ob die Überlastsicherung ausgelöst hat oder nicht. Das Verbringen von dem Kopplungszustand in den Entkopplungszustand kann als ein "Auslösen" der Überlastsicherung bezeichnet werden. Der Benutzer kann entsprechende Maßnahmen treffen und beispielsweise das blockierende Spülgut entfernen.

Gemäß einer weiteren Ausführungsform erfasst die Erfassungseinrichtung einen Motorstrom der Antriebseinrichtung.

Insbesondere erfasst die Erfassungseinrichtung eine Erhöhung des Motorstroms, die bei einem Auslösen der Überlastsicherung, das heißt bei einem Verbringen der Überlastsicherung von dem Kopplungszustand in den Entkopplungszustand, auftritt. Beispielsweise kann nach einer erfassten Anzahl von beispielsweise fünf Erhöhungen des Motorstroms die Information ausgegeben werden, dass der Sprüharm blockiert ist und eine Maßnahme, wie beispielsweise ein Entfernen des blockierenden Spülguts, zu treffen ist.

Weitere mögliche Implementierungen der Haushalts-Geschirrspülmaschine umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Haushalts-Geschirrspülmaschine hinzufügen.

Weitere vorteilhafte Ausgestaltungen und Aspekte der Haushalts-Geschirrspülmaschine sind Gegenstand der Unteransprüche sowie der im Folgenden beschriebenen Ausführungsbeispiele der Haushalts-Geschirrspülmaschine. Im Weiteren wird die Haushalts-Geschirrspülmaschine anhand von bevorzugten Ausführungsformen unter Bezugnahme auf die beigelegten Figuren näher erläutert.
Fig. 1 zeigt eine schematische perspektivische Ansicht einer Ausführungsform einer Haushalts-Geschirrspülmaschine;
Fig. 2 zeigt eine schematische Schnittansicht einer Ausführungsform einer Sprühvorrichtung für die Haushalts-Geschirrspülmaschine gemäß Fig. 1;
Fig. 3 zeigt eine schematische Schnittansicht einer Ausführungsform einer Antriebseinrichtung für die Sprühvorrichtung gemäß Fig. 2;
Fig. 4 zeigt eine schematische perspektivische Ansicht einer Ausführungsform einer Überlastsicherung für die Antriebseinrichtung gemäß Fig. 3;
Fig. 5 zeigt eine schematische perspektivische Schnittansicht der Überlastsicherung gemäß Fig. 4;
Fig. 6 zeigt eine weitere schematische perspektivische Schnittansicht der Überlastsicherung gemäß Fig. 4;
Fig. 7 zeigt eine schematische Detailansicht der Überlastsicherung gemäß Fig. 4;
Fig. 8 zeigt eine schematische Schnittansicht einer weiteren Ausführungsform einer Antriebseinrichtung für die Sprühvorrichtung gemäß Fig. 2;
Fig. 9 zeigt eine schematische Aufsicht einer Ausführungsform einer Überlastsicherung für die Antriebseinrichtung gemäß Fig. 8;
Fig. 10 zeigt eine weitere schematische Aufsicht der Überlastsicherung gemäß Fig. 9;
Fig. 11 zeigt eine weitere schematische Aufsicht der Überlastsicherung gemäß Fig. 9;
Fig. 12 zeigt die Detailansicht XII gemäß Fig. 9; und
Fig. 13 zeigt ein schematisches Diagramm, bei dem der Motorstrom der Antriebseinrichtung gemäß den Fig. 3 und Fig. 8 über der Zeit aufgetragen ist.

In den Figuren sind gleiche oder funktionsgleiche Elemente mit denselben Bezugszeichen versehen worden, sofern nichts anderes angegeben ist.

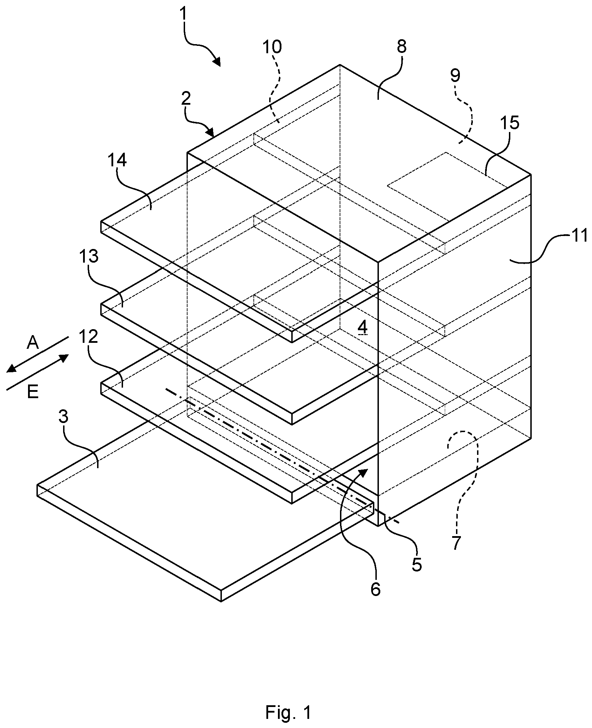

Die Fig. 1 zeigt eine schematische perspektivische Ansicht einer Ausführungsform einer Haushalts-Geschirrspülmaschine 1. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugsweise quaderförmig. Der Spülbehälter 2 kann in einem Gehäuse der Haushalts-Geschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

Die Haushalts-Geschirrspülmaschine 1 umfasst weiterhin eine Erfassungseinrichtung 15. Mit Hilfe der Erfassungseinrichtung 15 kann ein Motorstrom einer Antriebseinrichtung der Haushalts-Geschirrspülmaschine 1 erfasst werden. Die Erfassungseinrichtung 15 kann Teil einer Steuereinheit der Haushalts-Geschirrspülmaschine 1 sein. Die Steuereinheit ist geeignet, ein Spülprogramm der Haushalts-Geschirrspülmaschine 1 durchzuführen. Beispielsweise kann in der Steuereinheit eine Vielzahl an Spülprogrammen gespeichert sein. Die Steuereinheit kann beispielsweise eine Umwälzpumpe der Haushalts-Geschirrspülmaschine 1 ansteuern. Die Steuereinheit kann mit einem Anzeige-Display der Haushalts-Geschirrspülmaschine 1 gekoppelt sein. Mit Hilfe des Anzeige-Displays können beispielsweise Betriebszustände der Haushalts-Geschirrspülmaschine 1 an einen Benutzer ausgegeben werden.

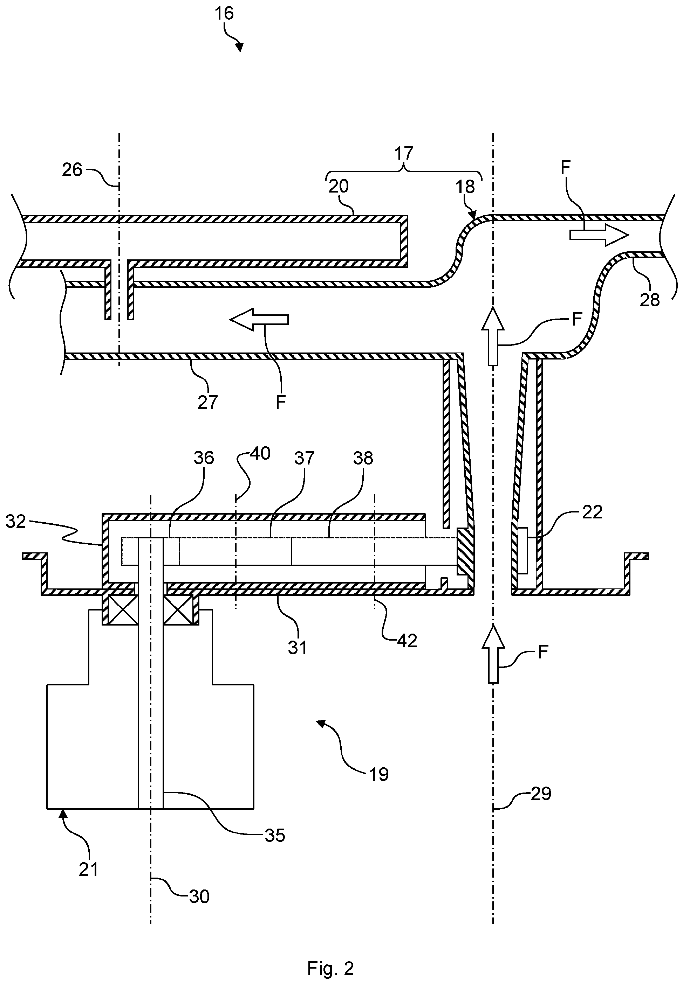

Die Fig. 2 zeigt eine schematische Schnittansicht einer Ausführungsform einer Sprühvorrichtung 16 für die Haushalts-Geschirrspülmaschine 1. Die Sprühvorrichtung 16 ist innerhalb des Spülbehälters 2 angeordnet. Insbesondere ist die Sprühvorrichtung 16 unterhalb der Spülgutaufnahme 12 positioniert. Die Sprühvorrichtung 16 kann an dem Boden 7 positioniert sein. Die Sprühvorrichtung 16 umfasst einen Sprüharm 17 zum Beaufschlagen von in dem Spülbehälter 2 aufgenommenem Spülgut (nicht gezeigt) mit Spülflotte und/oder Frischwasser F.

Der Sprüharm 17 weist einen Ausleger 18, der mit Hilfe einer Antriebseinrichtung 19 aktiv angetrieben ist, sowie einen drehbar an dem Ausleger 18 gelagerten Sprüharmsatelliten 20 auf. Der Sprüharmsatellit 20 kann mehrere Arme aufweisen. Beispielsweise kann der Sprüharmsatellit 20 drei Arme aufweisen, die in einem Winkel von 120° zueinander versetzt angeordnet sind. Der Sprüharmsatellit 20 umfasst mehrere Sprühdüsen. Mit Hilfe der Sprühdüsen kann das Spülgut mit Spülflotte und/oder Frischwasser F beaufschlagt werden. Der Sprüharmsatellit 20 kann auch Antriebssprühdüsen umfassen, mit deren Hilfe der Sprüharmsatellit 20 in Rotation versetzbar ist.

Der Sprüharmsatellit 20 ist um eine Drehachse 26 drehbar an dem Ausleger 18 gelagert. Der Sprüharmsatellit 20 ist nicht aktiv angetrieben. Das heißt, der Sprüharmsatellit 20 weist keine eigene Antriebseinrichtung auf. Insbesondere ist der Sprüharmsatellit 20 mit Hilfe der Spülflotte und/oder des Frischwassers F rückstoßangetrieben. Hierzu kann die nicht gezeigte Antriebssprühdüse vorgesehen sein. Unter "rückstoßangetrieben" ist vorliegend zu verstehen, dass der Sprüharmsatellit 20 durch die aus den Sprühdüsen und/oder aus der Antriebssprühdüse austretende Spülflotte und/oder das Frischwasser F in Rotation um die Drehachse 26 versetzt wird.

Der Ausleger 18 hingegen ist im Gegensatz zum Sprüharmsatelliten 20 aktiv angetrieben. Hierzu ist die Antriebseinrichtung 19 vorgesehen. Der Ausleger 18 umfasst einen ersten Arm 27, an dem der Sprüharmsatellit 20 drehbar um die Drehachse 26 gelagert ist, sowie einen zweiten Arm 28. Die Arme 27, 28 können nicht gezeigte Sprühdüsen aufweisen. Die Arme 27, 28 können jedoch auch frei von Sprühdüsen sein. Vorzugsweise sind zwei derartige Arme 27, 28 vorgesehen. Die Anzahl der Arme 27, 28 ist jedoch beliebig. Es kann auch genau ein Arm 27, 28 oder es können mehr als zwei Arme 27, 28 vorgesehen sein.

Der Ausleger 18 ist mit Hilfe der Antriebseinrichtung 19 um eine Drehachse 29 drehbar. Die Drehachsen 26, 29 sind vorzugsweise parallel zueinander und beabstandet voneinander angeordnet. Sowohl der Sprüharmsatellit 20 als auch der Ausleger 18 sind hohl ausgebildet, so dass die Spülflotte und/oder das Frischwasser F durch den Ausleger 18 und den Sprüharmsatelliten 20 hindurchströmen und an den Sprühdüsen beziehungsweise an der Antriebssprühdüse ausströmen kann.

Die Antriebseinrichtung 19 umfasst ein Antriebselement 21, insbesondere einen Elektromotor, mit einer Antriebswelle 35, die sich im Betrieb der Haushalts-Geschirrspülmaschine 1 um eine Drehachse 30 dreht. Die Drehachsen 29, 30 sind parallel zueinander und beabstandet voneinander angeordnet. Die Antriebseinrichtung 19 ist an einem Pumpentopf 31 befestigt. Der Pumpentopf 31 ist an dem Boden 7 befestigt. Der Ausleger 18 ist um die Drehachse 29 drehbar an dem Pumpentopf 31 gelagert.

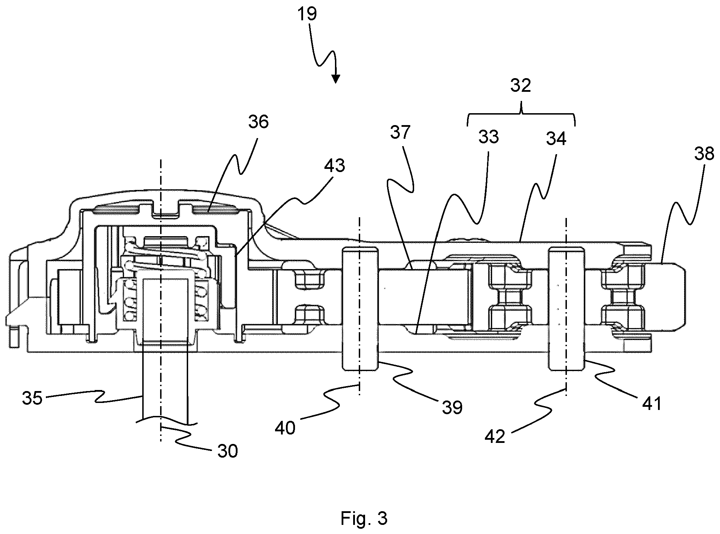

Die Fig. 3 zeigt eine schematische Schnittansicht einer Ausführungsform einer wie zuvor erwähnten Antriebseinrichtung 19. Die Antriebseinrichtung 19 umfasst ein Getriebegehäuse 32 mit einem Gehäuseunterteil 33 und einem Gehäuseoberteil 34. Das Gehäuseunterteil 33 und das Gehäuseoberteil sind formschlüssig miteinander verbunden. Eine formschlüssige Verbindung entsteht durch das Ineinander- oder Hintergreifen von mindestens zwei Verbindungspartnern. An dem Gehäuseunterteil 33 und dem Gehäuseoberteil 34 können Rasthaken oder Schnapphaken vorgesehen sein, mit deren Hilfe sich das Gehäuseunterteil 33 und das Gehäuseoberteil 34 formschlüssig miteinander verbinden lassen.

Wie zuvor erwähnt, umfasst die Antriebseinrichtung 19 das Antriebselement 21 mit der Antriebswelle 35, die sich um die Drehachse 30 dreht. In dem Getriebegehäuse 32 aufgenommen sind mehrere miteinander in Eingriff stehende Zahnräder 36 bis 38. Vorzugsweise ist ein erstes Zahnrad 36 vorgesehen, das drehfest mit der Antriebswelle 35 verbunden ist. Die Drehachse 30 ist dabei zugleich die Drehachse des ersten Zahnrads 36. Mit dem ersten Zahnrad 36 in Eingriff ist ein zweites Zahnrad 37. Das zweite Zahnrad 37 ist mit Hilfe einer Achse 39 drehbar in dem Getriebegehäuse 32 gelagert. Das zweite Zahnrad 37 dreht sich in dem Getriebegehäuse 32 um eine Drehachse 40.

Mit dem zweiten Zahnrad 37 in Eingriff ist ein drittes Zahnrad 38, das mit Hilfe einer Achse 41 drehbar in dem Getriebegehäuse 32 gelagert ist. Die Achsen 39, 41 können in dem Getriebegehäuse 32 gelagerte Bolzen oder Stifte sein. Das dritte Zahnrad 38 dreht sich in dem Getriebegehäuse 32 um eine Drehachse 42. Das dritte Zahnrad 38 ist in formschlüssigem Eingriff mit einer Sprüharmverzahnung 22 (Fig. 2) des Auslegers 18, um diesen in Rotation zu versetzen. Dem ersten Zahnrad 36 ist eine Überlastsicherung 43 zugeordnet.

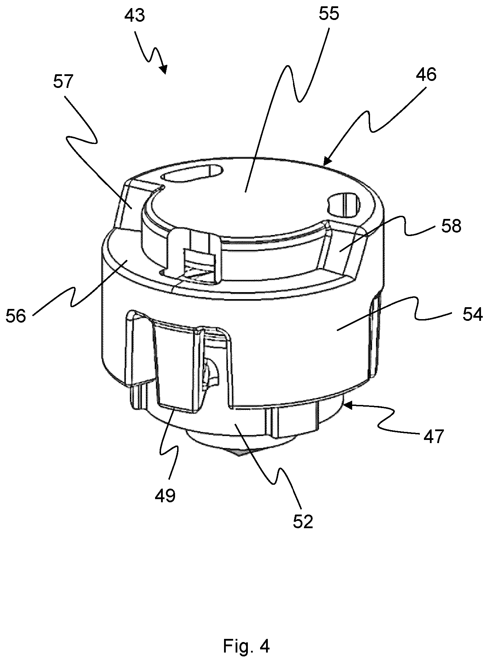

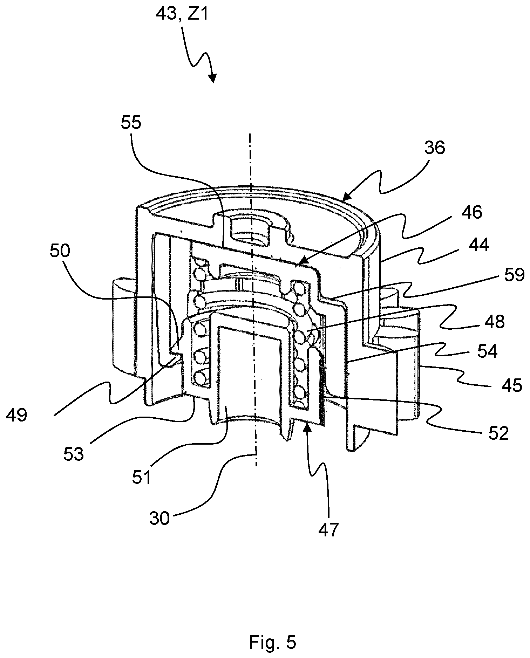

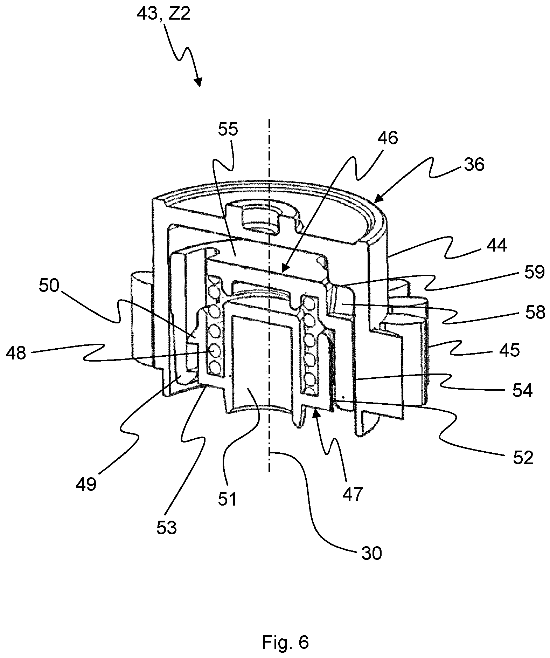

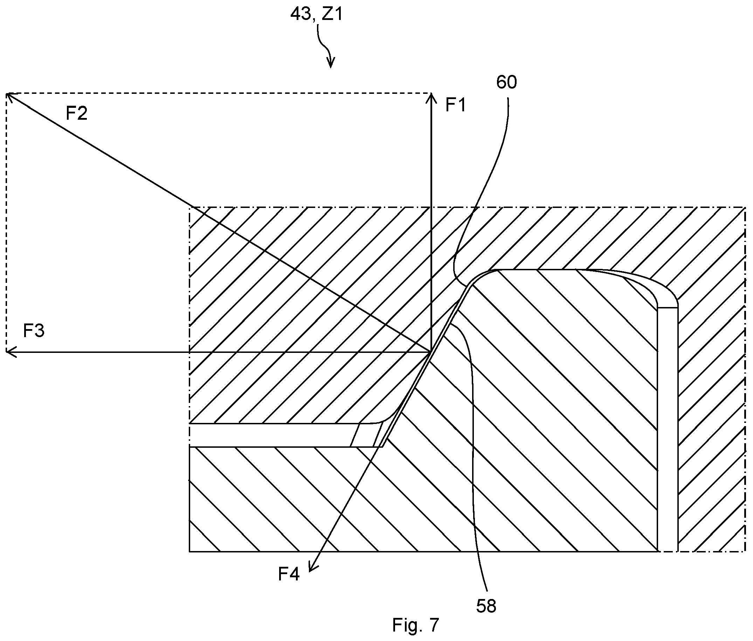

Die Fig. 4 zeigt eine schematische perspektivische Ansicht einer Ausführungsform einer wie zuvor erwähnten Überlastsicherung 43 für die Antriebseinrichtung 19. Die Fig. 5 und 6 zeigen jeweils schematische perspektivische Schnittansichten der Überlastsicherung 43. Die Fig. 7 zeigt eine schematische Detailansicht der Überlastsicherung 43. Nachfolgend wird auf die Fig. 4 bis 7 gleichzeitig Bezug genommen.

In den Fig. 5 und 6 ist zusätzlich zu der Überlastsicherung 43 das erste Zahnrad 36 gezeigt. Das erste Zahnrad 36 umfasst einen topfförmigen Basisabschnitt 44, in dem die Überlastsicherung 43 aufgenommen ist. An dem Basisabschnitt 44 ist eine Verzahnung 45 vorgesehen, die in formschlüssigem Eingriff mit dem zweiten Zahnrad 37 ist. Der Basisabschnitt 44 fungiert als Aufnahmebereich für die Überlastsicherung 43.

Die Überlastsicherung 43 umfasst ein Überlastelement 46 sowie ein Gehäuseelement 47. Zwischen dem Überlastelement 46 und dem Gehäuseelement 47 ist ein Federelement 48 vorgesehen. Das Federelement 48 kann eine Zylinderfeder sein. Vorzugsweise ist das Federelement 48 eine Druckfeder. Das Überlastelement 46 und das Gehäuseelement 47 sind formschlüssig miteinander verbunden. Hierzu können beispielsweise an dem Überlastelement 46 Schnapphaken 49 vorgesehen sein, die in entsprechende hakenförmige Eingriffsabschnitte 50 des Gehäuseelements 47 einrasten können.

Das Gehäuseelement 47 umfasst einen Aufnahmeabschnitt 51 zum Aufnehmen der Antriebswelle 35. Die Antriebswelle 35 kann im einfachsten Fall eine seitliche Abflachung oder Abfräsung aufweisen, wobei der Aufnahmeabschnitt 51 eine dazu korrespondierende Geometrie aufweist, so dass die Antriebswelle 35 drehfest in dem Aufnahmeabschnitt 51 aufgenommen ist. Bevorzugt weist die Antriebswelle 35 jedoch ein Vielzahnprofil mit einer Kodierung auf. Der Aufnahmeabschnitt 51 ist dazu korrespondierend ausgebildet. Das Gehäuseelement 47 umfasst ferner einen rohrförmigen Basisabschnitt 52, der einteilig, insbesondere materialeinstückig, mit dem zylinderförmigen Aufnahmeabschnitt 51 verbunden ist. Hierzu kann ein plattenförmiger Bodenabschnitt 53 vorgesehen sein. Das Federelement 48 ist zwischen dem Basisabschnitt 52 und dem Aufnahmeabschnitt 51 angeordnet. Somit ist das Federelement 48 zumindest teilweise in dem Gehäuseelement 47 aufgenommen.

Das Federelement 48 ist ebenso zumindest abschnittsweise in dem Überlastelement 46 aufgenommen. Das Überlastelement 46 umfasst einen zylinderförmigen Basisabschnitt 54, der oberseitig durch einen Deckelabschnitt 55 verschlossen ist. Das Überlastelement 46 umfasst weiterhin einen Eingriffsabschnitt 56 mit zwei schräg angeordneten Steuerflächen 57, 58. Das erste Zahnrad 36 umfasst an seinem Basisabschnitt 44 einen zu dem Eingriffsabschnitt 56 korrespondierenden Gegeneingriffsabschnitt 59, in den der Eingriffsabschnitt 56 formschlüssig eingreifen kann. Der Gegeneingriffsabschnitt 59 umfasst zu den Steuerflächen 57, 58 korrespondierende Steuerflächen 60, von denen in der Fig. 7 lediglich eine gezeigt ist.

Die Funktionalität der Überlastsicherung 43 wird nachfolgend erläutert. Bei einer Blockade des Sprüharms 17, und insbesondere des Auslegers 18, dreht das Antriebselement 21 die Antriebswelle 35 weiter. Um nun zu verhindern, dass das Antriebselement 21 oder die Zahnräder 36 bis 38 beschädigt werden, kann die Überlastsicherung 43 von einem in der Fig. 5 gezeigten Kopplungszustand Z1, in dem eine Kraftübertragung zwischen der Antriebseinrichtung 19 und dem Sprüharm 17, insbesondere dem Ausleger 18, vorhanden ist, in einen in der Fig. 6 gezeigten Entkopplungszustand Z2, in dem die Kraftübertragung zwischen der Antriebseinrichtung 19 und dem Sprüharm 17, insbesondere dem Ausleger 18, unterbrochen ist, verbracht werden. Das Verbringen der Überlastsicherung 43 von dem Kopplungszustand Z1 in den Entkopplungszustand Z2 kann auch als "Auslösen" der Überlastsicherung 43 bezeichnet werden.

Dieses Verbringen von dem Kopplungszustand Z1 in den Entkopplungszustand Z2 geschieht dadurch, dass die Steuerflächen 58, 60 reibungsbehaftet aufeinander abgleiten, wodurch das Überlastelement 46 gegen eine Federvorspannung des Federelements 48 auf das Gehäuseelement 47 hinzubewegt wird. Diese Bewegung erfolgt linear entlang der Drehachse 30. Dreht sich die Antriebswelle 35 weiter, verbringt das Federelement 48 die Überlastsicherung 43 selbsttätig von dem Entkopplungszustand Z2 in den Kopplungszustand Z1 zurück. Ist der Sprüharm 17, und insbesondere der Ausleger 18, weiterhin blockiert, so wird bei jeder Umdrehung der Antriebswelle 35 die Überlastsicherung 43 von dem Kopplungszustand Z1 in den Entkopplungszustand Z2 und zurück verbracht.

Wie die Fig. 7 zeigt, wirkt an den Steuerflächen 58, 60 eine Federkraft F1 des Federelements 48. Senkrecht zu den Steuerflächen 58, 60 wirkt eine Normalkraft F2. Eine resultierende Kraft F3 wirkt senkrecht zu der Federkraft F1. Parallel zu den Steuerflächen 58, 60 wirkt eine Reibkraft F4. Das Kräfteverhältnis der Kräfte F1 bis F4 kann durch eine entsprechende Auswahl des Federelements 48 variiert werden, so dass die Überlastsicherung 43 bei einer Blockade des Sprüharms 17, insbesondere des Auslegers 18, wahlweise früher oder später auslöst.

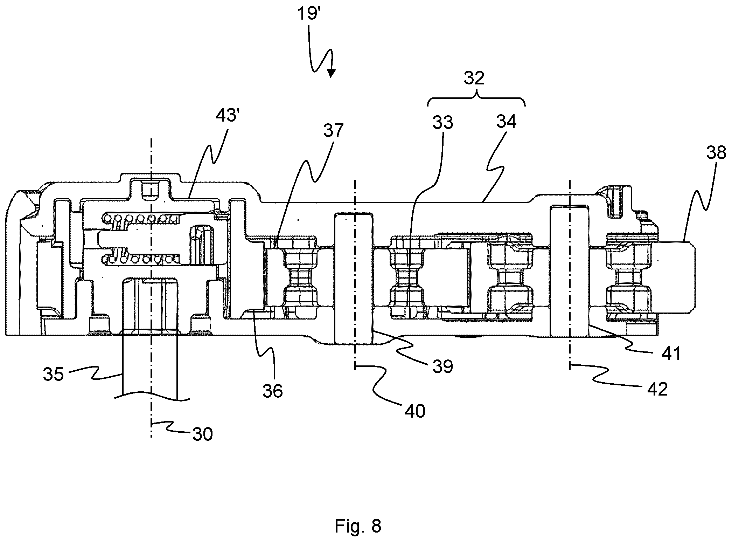

Die Fig. 8 zeigt eine schematische Schnittansicht einer weiteren Ausführungsform einer Antriebseinrichtung 19' für die Sprühvorrichtung 16. Die Antriebseinrichtung 19' umfasst, wie schon mit Bezug auf die Antriebseinrichtung 19 gemäß der Fig. 3 erläutert, ein Getriebegehäuse 32 mit einem Gehäuseunterteil 33 und einem Gehäuseoberteil 34. In dem Getriebegehäuse 32 sind drei Zahnräder 36 bis 38, insbesondere ein erstes Zahnrad 36, ein zweites Zahnrad 37 und ein drittes Zahnrad 38, aufgenommen.

Das erste Zahnrad 36 ist mit einer Antriebswelle 35 eines wie zuvor mit Bezug auf die Antriebseinrichtung 19 erwähnten Antriebselements der Antriebseinrichtung 19' wirkverbunden und dreht sich um die Drehachse 30. Dem zweiten Zahnrad 37 ist eine Achse 39 zugeordnet. Das zweite Zahnrad 37 dreht sich um eine Drehachse 40. Dem dritten Zahnrad 38 ist eine Achse 41 zugeordnet. Das dritte Zahnrad 38 dreht sich um eine Drehachse 42. Dem ersten Zahnrad 36 ist eine Überlastsicherung 43' zugeordnet. Die Überlastsicherung 43' weist grundsätzlich dieselbe Funktionalität auf wie die Überlastsicherung 43, die zuvor erläutert wurde. Die Antriebseinrichtungen 19, 19' unterscheiden sich im Wesentlichen durch die konstruktive Ausgestaltung der jeweiligen Überlastsicherung 43, 43' voneinander.

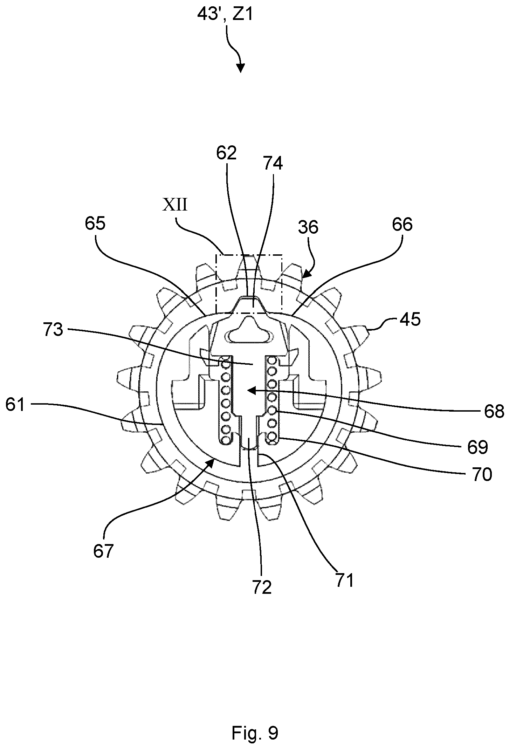

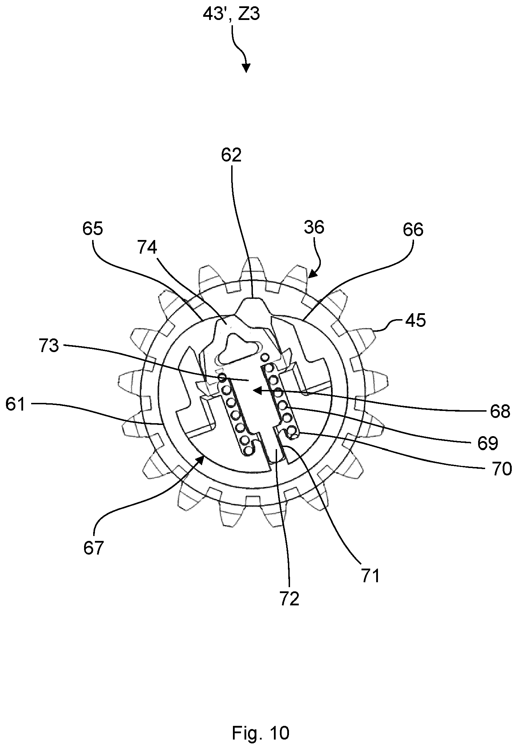

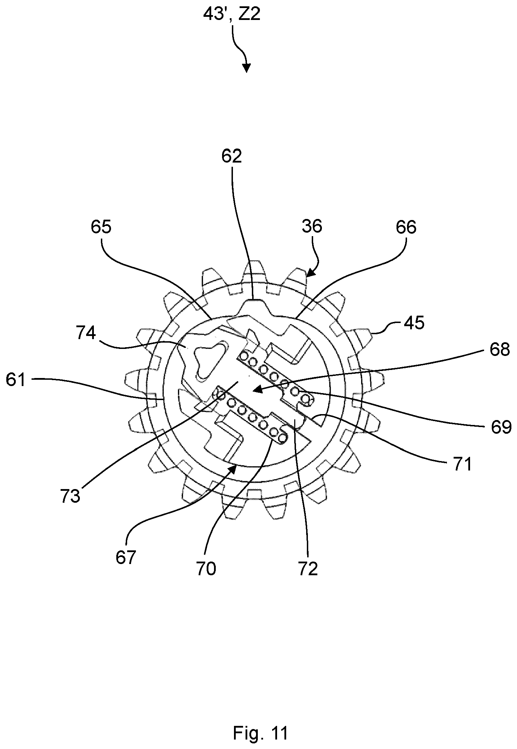

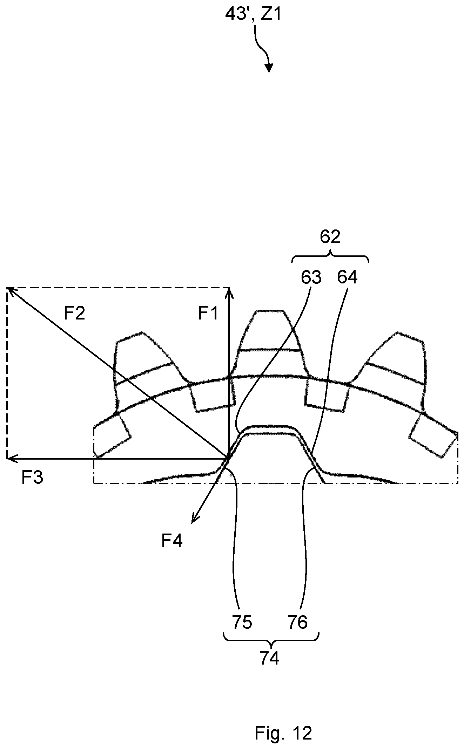

Die Fig. 9 zeigt eine schematische Aufsicht der Überlastsicherung 43' in einem wie zuvor erläuterten Kopplungszustand Z1. Die Fig. 10 zeigt eine weitere schematische Aufsicht der Überlastsicherung 43' in einem Zwischenzustand Z3. Die Fig. 11 zeigt eine schematische Aufsicht der Überlastsicherung 43' in einem wie zuvor erläuterten Entkopplungszustand Z2. Die Fig. 12 zeigt die Detailansicht XII gemäß der Fig. 9. Nachfolgend wird auf die Fig. 9 bis 12 gleichzeitig Bezug genommen.

Das erste Zahnrad 36 umfasst - wie zuvor schon mit Bezug auf die Antriebseinrichtung 19 erläutert - eine Verzahnung 45, die mit dem zweiten Zahnrad 37 in Eingriff ist. Das erste Zahnrad 36 umfasst innenseitig eine Innenkontur 61 mit einem nutförmigen Gegeneingriffsabschnitt 62. Der Gegeneingriffsabschnitt 62 weist zwei Steuerflächen 63, 64 (Fig. 12) auf. Die Innenkontur 61 ist abschnittsweise kreisförmig, weist jedoch benachbart zu dem Gegeneingriffsabschnitt 62 beidseits zwei Abflachungen 65, 66 der kreisförmigen Geometrie der Innenkontur 61 auf. Die Überlastsicherung 43' umfasst ein in dem ersten Zahnrad 36 drehbar aufgenommenes Gehäuseelement 67. In dem Gehäuseelement 67 aufgenommen sind ein Überlastelement 68 sowie ein Federelement 69. Dabei ist das Überlastelement 68 zumindest abschnittsweise in dem Federelement 69 aufgenommen. Das Federelement 69 kann eine Zylinderfeder sein. Insbesondere ist das Federelement 69 eine Druckfeder.

Das Gehäuseelement 67 umfasst einen Aufnahmeabschnitt 70, in dem das Federelement 69 und das Überlastelement 68 aufgenommen sind. An den Aufnahmeabschnitt 70 schließt sich ein Führungsabschnitt 71 an, mit dessen Hilfe das Überlastelement 68 senkrecht zu der Drehachse 30 linear in dem Gehäuseelement 67 geführt ist. Hierzu ist an dem Überlastelement 68 ein Führungszapfen 72 vorgesehen. Das Überlastelement 68 umfasst ferner einen Basisabschnitt 73, der in dem Federelement 69 aufgenommen ist. Der Basisabschnitt 73 kann zylinderförmig sein.

An den Basisabschnitt 73 schließt sich ein Eingriffsabschnitt 74 an. Der Eingriffsabschnitt 74 ist geeignet in den Gegeneingriffsabschnitt 62 einzugreifen, um die Überlastsicherung 43' in den Kopplungszustand Z1 zu verbringen. Um die Überlastsicherung 43' von dem Kopplungszustand Z1 in den Entkopplungszustand Z2 zu verbringen, wird der Eingriffsabschnitt 74 außer formschlüssigem Eingriff mit dem Gegeneingriffsabschnitt 62 verbracht. Der Eingriffsabschnitt 74 umfasst zwei Steuerflächen 75, 76 (Fig. 12).

Wie die Fig. 12 zeigt, wirkt je nach Drehrichtung der Antriebswelle 35 (nicht gezeigt) auf eine der Steuerflächen 75, 76 des Eingriffsabschnitts 74 und eine der Steuerflächen 63, 64 des Gegeneingriffsabschnitts 62 eine Federkraft F1 des Federelements 69. In der Orientierung der Fig. 12 dreht die Antriebswelle 35 entgegen dem Uhrzeigersinn. Senkrecht zu den Steuerflächen 63, 75 wirkt eine Normalkraft F2. Eine resultierende Kraft F3 wirkt senkrecht zu der Federkraft F1. Parallel zu den Steuerflächen 63, 75 wirkt eine Reibkraft F4.

Bei einem Blockieren des Sprüharms 17, insbesondere des Auslegers 18, gleiten die Steuerflächen 63, 75 reibungsbehaftet aufeinander ab, so dass der Eingriffsabschnitt 74, wie in der Fig. 10 gezeigt, außer formschlüssigem Eingriff mit dem Gegeneingriffsabschnitt 62 gerät. Der Eingriffsabschnitt 74 gleitet dann auf der Abflachung 65 der Innenkontur 61 ab. Hierbei verbleibt das Federelement 69 komprimiert. Sobald der Eingriffsabschnitt 74 über die Abflachung 65 geglitten ist, kommt dieser in Anlage mit der kreisförmigen Innenkontur 61, wodurch das Federelement 69 teilweise entspannt wird. Hierdurch wird die Federkraft F1 geringer. Nach einer Umdrehung der Antriebswelle 35 schnappt der Eingriffsabschnitt 74 wieder in den Gegeneingriffsabschnitt 62 ein. Solange der Sprüharm 17 blockiert ist, verbringt sich die Überlastsicherung 43' bei jeder Umdrehung der Antriebswelle 35 von dem Kopplungszustand Z1 in den Entkopplungszustand Z2 und zurück.

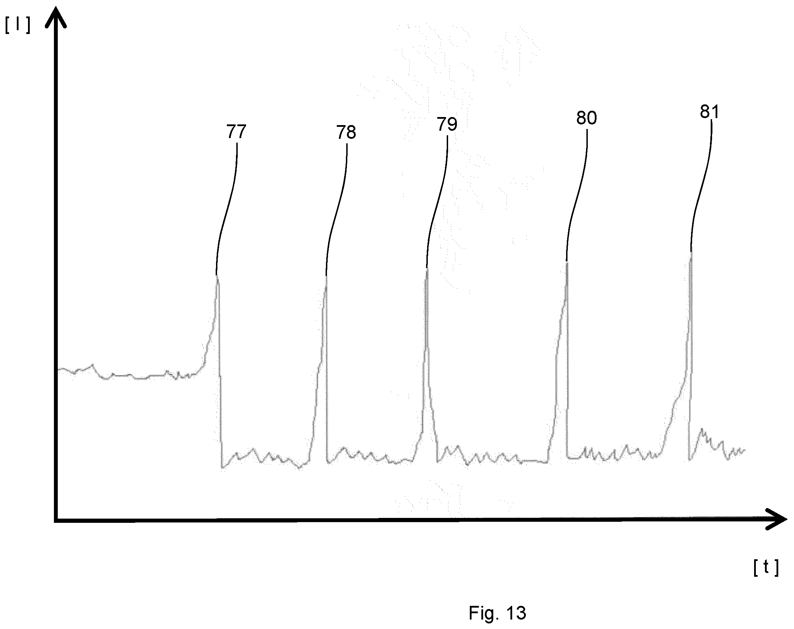

Die Fig. 13 zeigt ein schematisches Diagramm, bei dem auf der Ordinatenachse der Motorstrom I des Antriebselements der Antriebseinrichtung 19, 19' aufgetragen ist. Auf der Abszissenachse ist die Zeit t aufgetragen. Wie zuvor erläutert, ist die Überlastsicherung 43, 43' vorgesehen, um die Sprühvorrichtung 16 und/oder die Antriebseinrichtung 19, 19' vor Beschädigungen zu schützen. Für den Fall, dass bei einem rotierenden Sprüharm 17 das Spülgut den Ausleger 18 blockiert, löst die Überlastsicherung 43, 43' bei Überschreiten einer bestimmten Kraft aus. Diese Kraft wird unter anderem durch das jeweilige Federelement 48, 69 beeinflusst. Die Kraft beziehungsweise das Drehmoment, die beziehungsweise das erforderlich ist, um die Überlastsicherung 43, 43' auszulösen, wird jedoch nicht nur durch die Federkraft F1 bestimmt, sondern maßgeblich durch den jeweiligen Winkel, in dem die Steuerflächen 57, 58, 60, 63, 64, 75, 76 positioniert sind, und damit durch die Normalkraft F2. Außerdem ist die Kraft beziehungsweise das Drehmoment zum Auslösen der Überlastsicherung 43, 43' durch die Materialauswahl und dadurch durch die Gleitreibungszahl beeinflussbar.

Die Antriebswelle 35 kann sich dann um 360° drehen, und die Überlastsicherung 43, 43' verbringt sich selbsttätig wieder von dem Entkopplungszustand Z2 in den Kopplungszustand Z1. Solange das Spülgut den Ausleger 18 weiter blockiert, löst die Überlastsicherung 43, 43' immer weiter aus. Da diese Dauerbelastung die Sprühvorrichtung 16 überlasten und/oder das Spülergebnis verschlechtern könnte, ist es wünschenswert, den Benutzer auf die Blockade aufmerksam zu machen. Dies kann beispielsweise dadurch geschehen, dass der Motorstrom I des Antriebselements überwacht wird.

Bei jedem Auslösen der Überlastsicherung 43, 43' kann die Erfassungseinrichtung 15 eine Erhöhung 77 bis 81 des Motorstroms I feststellen. In der Fig. 13 sind fünf derartige Erhöhungen 77 bis 81 dargestellt. Die Erhöhungen 77 bis 81 können, sobald sie regelmäßig vorkommen, als Indikator für eine Blockade des Auslegers 18 stehen. Beispielsweise kann nach fünf Erhöhungen 77 bis 81 von einer dauerhaften Blockade des Sprüharms 17 ausgegangen werden.

Für das weitere Vorgehen bei einem Erkennen der Blockade des Sprüharms 17 beziehungsweise des Auslegers 18 kann nun beispielsweise die Haushalts-Geschirrspülmaschine 1 abgeschaltet werden. Optional kann zusätzlich oder alternativ eine Fehlermeldung für den Benutzer angezeigt werden. Ferner könnte dem Benutzer per SmartApp mitgeteilt werden, dass eine Blockade des Auslegers 18 vorhanden ist, die der Benutzer beheben kann. Ferner kann für den Fall, dass die Antriebseinrichtung 19, 19' selbst beschädigt ist, die Meldung ausgegeben werden, dass der Kundendienst zu rufen ist. Alternativ kann die Haushalts-Geschirrspülmaschine 1 auch ohne Aktion von außen weiterlaufen. Dies könnte jedoch ein schlechteres Reinigungsergebnis zur Folge haben.

Obwohl die vorliegende Erfindung anhand von Ausführungsbeispielen beschrieben wurde, ist sie vielfältig modifizierbar.

### Verwendete Bezugszeichen:

- 1: Haushalts-Geschirrspülmaschine
- 2: Spülbehälter
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Erfassungseinrichtung
- 16: Sprühvorrichtung
- 17: Sprüharm
- 18: Ausleger
- 19: Antriebseinrichtung
- 19': Antriebseinrichtung
- 20: Sprüharmsatellit
- 21: Antriebselement
- 22: Sprüharmverzahnung
- 26: Drehachse
- 27: Arm
- 28: Arm
- 29: Drehachse
- 30: Drehachse
- 31: Pumpentopf
- 32: Getriebegehäuse
- 33: Gehäuseunterteil
- 34: Gehäuseoberteil
- 35: Antriebswelle
- 36: Zahnrad
- 37: Zahnrad
- 38: Zahnrad
- 39: Achse
- 40: Drehachse
- 41: Achse
- 42: Drehachse
- 43: Überlastsicherung
- 43': Überlastsicherung
- 44: Basisabschnitt
- 45: Verzahnung
- 46: Überlastelement
- 47: Gehäuseelement
- 48: Federelement
- 49: Schnapphaken
- 50: Eingriffsabschnitt
- 51: Aufnahmeabschnitt
- 52: Basisabschnitt
- 53: Bodenabschnitt
- 54: Basisabschnitt
- 55: Deckelabschnitt
- 56: Eingriffsabschnitt
- 57: Steuerfläche
- 58: Steuerfläche
- 59: Gegeneingriffsabschnitt
- 60: Steuerfläche
- 61: Innenkontur
- 62: Gegeneingriffsabschnitt
- 63: Steuerfläche
- 64: Steuerfläche
- 65: Abflachung
- 66: Abflachung
- 67: Gehäuseelement
- 68: Überlastelement
- 69: Federelement
- 70: Aufnahmeabschnitt
- 71: Führungsabschnitt
- 72: Führungszapfen
- 73: Basisabschnitt
- 74: Eingriffsabschnitt
- 75: Steuerfläche
- 76: Steuerfläche
- 77: Erhöhung
- 78: Erhöhung
- 79: Erhöhung
- 80: Erhöhung
- 81: Erhöhung

- A: Auszugsrichtung
- E: Einschubrichtung
- F: Spülflotte und/oder Frischwasser
- F1: Federkraft
- F2: Normalkraft
- F3: resultierende Kraft
- F4: Reibkraft
- I: Motorstrom
- t: Zeit
- Z1: Kopplungszustand
- Z2: Entkopplungszustand
- Z3: Zwischenzustand

## Patentansprüche

1. Haushalts-Geschirrspülmaschine (1) mit einem Spülbehälter (2), einem Sprüharm (17) zum Beaufschlagen von in dem Spülbehälter (2) aufgenommenem Spülgut mit Spülflotte und/oder Frischwasser (F), einer Antriebseinrichtung (19, 19') zum aktiven Antreiben des Sprüharms (17), und einer Überlastsicherung (43, 43'), welche sich bei einer Blockade des Sprüharms (17) selbsttätig von einem Kopplungszustand (Z1), in dem eine Kraftübertragung zwischen der Antriebseinrichtung (19, 19') und dem Sprüharm (17) vorhanden ist, in einen Entkopplungszustand (Z2), in dem die Kraftübertragung zwischen der Antriebseinrichtung (19, 19') und dem Sprüharm (17) unterbrochen ist, verbringt, **dadurch gekennzeichnet, dass** die Überlastsicherung (43, 43') in Richtung des Kopplungszustands (Z1) federvorgespannt ist.

2. Haushalts-Geschirrspülmaschine nach Anspruch 1, **dadurch gekennzeichnet, dass** eine Drehachse (30) einer Antriebswelle (35) der Antriebseinrichtung (19, 19') und eine Drehachse (26) des Sprüharms (17) parallel zueinander und beabstandet voneinander angeordnet sind.

3. Haushalts-Geschirrspülmaschine nach Anspruch 1 oder 2, **dadurch gekennzeichnet, dass** die Überlastsicherung (43, 43') in einem Zahnrad (36) der Antriebseinrichtung (19, 19') aufgenommen ist.

4. Haushalts-Geschirrspülmaschine nach Anspruch 3, **dadurch gekennzeichnet, dass** die Überlastsicherung (43, 43') ein Überlastelement (46, 68) umfasst, welches zur Kraftübertragung zwischen der Antriebseinrichtung (19, 19') und dem Sprüharm (17) mit einem Gegeneingriffsabschnitt (59, 62) des Zahnrads (36) in kraft- und/oder formschlüssigem Eingriff ist, wobei das Überlastelement (43, 43') bei einer Blockade des Sprüharms (17) außer kraft- und/oder formschlüssigem Eingriff mit dem Gegeneingriffsabschnitt (59, 62) gerät, um die Überlastsicherung (43, 43') von dem Kopplungszustand (Z1) in den Entkopplungszustand (Z2) zu verbringen.

5. Haushalts-Geschirrspülmaschine nach Anspruch 4, **dadurch gekennzeichnet, dass** sich das Überlastelement (46) bei einer Blockade des Sprüharms (17) linear entlang einer Drehachse (30) des Zahnrads (36) bewegt, um die Überlastsicherung (43) von dem Kopplungszustand (Z1) in den Entkopplungszustand (Z2) zu verbringen.

6. Haushalts-Geschirrspülmaschine nach Anspruch 5, **dadurch gekennzeichnet, dass** die Überlastsicherung (43) ein Gehäuseelement (47) umfasst, welches mit dem Überlastelement (46) verbunden ist, wobei zwischen dem Überlastelement (46) und dem Gehäuseelement (47) ein Federelement (48) angeordnet ist.

7. Haushalts-Geschirrspülmaschine nach Anspruch 6, **dadurch gekennzeichnet, dass** das Federelement (48) das Überlastelement (46) bei einem Verbringen der Überlastsicherung (43) von dem Kopplungszustand (Z1) in den Entkopplungszustand (Z2) entlang der Drehachse (30) des Zahnrads (36) linear gegenüber dem Gehäuseelement (47) bewegt.

8. Haushalts-Geschirrspülmaschine nach Anspruch 6 oder 7, **dadurch gekennzeichnet, dass** das Federelement (48) zumindest abschnittsweise in dem Überlastelement (46) aufgenommen ist.

9. Haushalts-Geschirrspülmaschine nach Anspruch 4, **dadurch gekennzeichnet, dass** sich das Überlastelement (68) bei einer Blockade des Sprüharms (17) linear senkrecht zu einer Drehachse (30) des Zahnrads (36) bewegt, um die Überlastsicherung (43') von dem Kopplungszustand (Z1) in den Entkopplungszustand (Z2) zu verbringen.

10. Haushalts-Geschirrspülmaschine nach Anspruch 9, **dadurch gekennzeichnet, dass** die Überlastsicherung (43') ein in dem Zahnrad (36) aufgenommenes Gehäuseelement (67) umfasst, wobei zwischen dem Gehäuseelement (67) und dem Überlastelement (68) ein Federelement (69) angeordnet ist.

11. Haushalts-Geschirrspülmaschine nach Anspruch 10, **dadurch gekennzeichnet, dass** das Federelement (69) das Überlastelement (68) bei einem Verbringen der Überlastsicherung (43') von dem Kopplungszustand (Z1) in den Entkopplungszustand (Z2) senkrecht zu der Drehachse (30) des Zahnrads (36) linear gegenüber dem Gehäuseelement (67) bewegt.

12. Haushalts-Geschirrspülmaschine nach Anspruch 10 oder 11, **dadurch gekennzeichnet, dass** das Überlastelement (68) zumindest abschnittsweise in dem Federelement (69) aufgenommen ist.

13. Haushalts-Geschirrspülmaschine nach einem der Ansprüche 1 - 12, **gekennzeichnet durch** eine Erfassungseinrichtung (15) mit deren Hilfe erfassbar ist, ob sich die Überlastsicherung (43, 43') in dem Kopplungszustand (Z1) oder in dem Entkopplungszustand (Z2) befindet.

14. Haushalts-Geschirrspülmaschine nach Anspruch 13, **dadurch gekennzeichnet, dass** die Erfassungseinrichtung (15) einen Motorstrom (I) der Antriebseinrichtung (19, 19') erfasst.

## Claims

1. Household dishwasher (1) with a dishwasher cavity (2), a spray arm (17) for applying washing liquor and/or fresh water (F) to the dishwasher load received in the dishwasher cavity (2), a drive system (19, 19') for actively driving the spray arm (17), and an overload protection mechanism (43, 43'), which, if the spray arm (17) becomes blocked, moves autonomously from a coupling position (Z1), in which power is transmitted between the drive system (19, 19') and the spray arm (17), into a decoupling position (Z2), in which the power transmission between the drive system (19, 19') and the spray arm (17) is interrupted, **characterised in that** the overload protection mechanism (43, 43') is spring-biased in the direction of the coupling position (Z1).

2. Household dishwasher according to claim 1, **characterised in that** an axis of rotation (30) of a drive shaft (35) of the drive system (19, 19') and an axis of rotation (26) of the spray arm (17) are arranged parallel to one another and spaced apart from one another.

3. Household dishwasher according to claim 1 or 2, **characterised in that** the overload protection mechanism (43, 43') is received in a gear wheel (36) of the drive system (19, 19').

4. Household dishwasher according to claim 3, **characterised in that** the overload protection mechanism (43, 43') comprises an overload element (46, 68), which, for power transmission between the drive system (19, 19') and the spray arm (17), is engaged in a force-fitting manner and/or form-fitting manner with a counter-engagement section (59, 62) of the gear wheel (36), wherein, if the spray arm (17) becomes blocked, the overload element (43, 43') leaves the force-fitting and/or form-fitting engagement with the counter-engagement section (59, 62) in order to move the overload protection mechanism (43, 43') from the coupling position (Z1) into the decoupling position (Z2).

5. Household dishwasher according to claim 4, **characterised in that** if the spray arm (17) becomes blocked, the overload element (46) moves linearly along an axis of rotation (30) of the gear wheel (36) in order to move the overload protection mechanism (43) from the coupling position (Z1) into the decoupling position (Z2).

6. Household dishwasher according to claim 5, **characterised in that** the overload protection mechanism (43) comprises a housing element (47) connected to the overload element (46), wherein a spring element (48) is arranged between the overload element (46) and the housing element (47).

7. Household dishwasher according to claim 6, **characterised in that**, when the overload protection mechanism (43) is moved from the coupling position (Z1) into the decoupling position (Z2), the spring element (48) moves the overload element (46) linearly along the axis of rotation (30) of the gear wheel (36) with respect to the housing element (47).

8. Household dishwasher according to claim 6 or 7, **characterised in that** the spring element (48) is, at least in sections, received in the overload element (46).

9. Household dishwasher according to claim 4, **characterised in that** if the spray arm becomes blocked (17), the overload element (68) moves linearly perpendicular to an axis of rotation (30) of the gear wheel (36) in order to move the overload protection mechanism (43') from the coupling position (Z1) into the decoupling position (Z2).

10. Household dishwasher according to claim 9, **characterised in that** the overload protection mechanism (43') comprises a housing element (67) received in the gear wheel (36), wherein a spring element (69) is arranged between the housing element (67) and the overload element (68).

11. Household dishwasher according to claim 10, **characterised in that** when the overload protection mechanism (43') is moved from the coupling position (Z1) into the decoupling position (Z2), the spring element (69) moves the overload element (68) linearly perpendicular to the axis of rotation (30) of the gear wheel (36) with respect to the housing element (67).

12. Household dishwasher according to claim 10 or 11, **characterised in that** the overload element (68) is, at least in sections, received in the spring element (69).

13. Household dishwasher according to one of claims 1 - 12, **characterised by** a detection system (15) which can be used to detect whether the overload protection mechanism (43, 43') is in the coupling position (Z1) or the decoupling position (Z2).

14. Household dishwasher according to claim 13, **characterised in that** the detection system (15) detects a motor current (I) of the drive system (19, 19').

## Revendications

1. Lave-vaisselle à usage domestique (1) avec un espace de lavage (2), un bras d'aspersion (17) pour alimenter en liquide de lavage et/ou en eau fraîche (F) des articles à laver contenus dans l'espace de lavage (2), un dispositif d'entraînement (19, 19') pour l'entraînement actif du bras d'aspersion (17), et un dispositif de protection contre les surcharges (43, 43') qui, en cas de blocage du bras d'aspersion (17), passe automatiquement d'un état de couplage (Z1), dans lequel une transmission de force entre le dispositif d'entraînement (19, 19') et le bras d'aspersion (17) est présente, à un état de découplage (Z2), dans lequel la transmission de force entre le dispositif d'entraînement (19, 19') et le bras d'aspersion (17) est interrompue, **caractérisé en ce que** le dispositif de protection contre les surcharges (43, 43') est précontraint par ressort dans la direction de l'état de couplage (Z1).

2. Lave-vaisselle à usage domestique selon la revendication 1, **caractérisé en ce qu'**un axe de rotation (30) d'un arbre d'entraînement (35) du dispositif d'entraînement (19, 19') et un axe de rotation (26) du bras d'aspersion (17) sont disposés parallèlement l'un à l'autre et à distance l'un de l'autre.

3. Lave-vaisselle à usage domestique selon la revendication 1 ou la revendication 2, **caractérisé en ce que** le dispositif de protection contre les surcharges (43, 43') est logé dans une roue dentée (36) du dispositif d'entraînement (19, 19').

4. Lave-vaisselle à usage domestique selon la revendication 3, **caractérisé en ce que** le dispositif de protection contre les surcharges (43, 43') comprend un élément de surcharge (46, 68) qui, pour la transmission de force entre le dispositif d'entraînement (19, 19') et le bras d'aspersion (17), est en prise par adhérence et/ou par complémentarité de forme avec une section d'engagement opposée (59, 62) de la roue dentée (36), dans lequel l'élément de surcharge (43, 43'), en cas de blocage du bras d'aspersion (17), se libère de l'engagement par adhérence et/ou par complémentarité de forme avec la section d'engagement opposée (59, 62), afin de permettre au dispositif de protection contre les surcharges (43, 43') de passer de l'état de couplage (Z1) à l'état de découplage (Z2).

5. Lave-vaisselle à usage domestique selon la revendication 4, **caractérisé en ce que** l'élément de surcharge (46) se déplace linéairement le long d'un axe de rotation (30) de la roue dentée (36) en cas de blocage du bras d'aspersion (17), pour permettre au dispositif de protection contre les surcharges (43) de passer de l'état de couplage (Z1) à l'état de découplage (Z2).

6. Lave-vaisselle à usage domestique selon la revendication 5, **caractérisé en ce que** le dispositif de protection contre les surcharges (43) comprend un élément de boîtier (47) qui est relié à l'élément de surcharge (46), dans lequel un élément de ressort (48) est disposé entre l'élément de surcharge (46) et l'élément de boîtier (47).

7. Lave-vaisselle à usage domestique selon la revendication 6, **caractérisé en ce que** l'élément de ressort (48) déplace l'élément de surcharge (46) de manière linéaire par rapport à l'élément de boîtier (47) le long de l'axe de rotation (30) de la roue dentée (36) lors d'un passage du dispositif de protection contre les surcharges (43) de l'état de couplage (Z1) à l'état de découplage (Z2).

8. Lave-vaisselle à usage domestique selon la revendication 6 ou la revendication 7, **caractérisé en ce que** l'élément de ressort (48) est logé au moins par sections dans l'élément de surcharge (46).

9. Lave-vaisselle à usage domestique selon la revendication 4, **caractérisé en ce que** l'élément de surcharge (68) se déplace de manière linéaire perpendiculairement à un axe de rotation (30) de la roue dentée (36) en cas de blocage du bras d'aspersion (17) afin de permettre au dispositif de protection contre les surcharges (43') de passer de l'état de couplage (Z1) à l'état de découplage (Z2).

10. Lave-vaisselle à usage domestique selon la revendication 9, **caractérisé en ce que** le dispositif de protection contre les surcharges (43') comprend un élément de boîtier (67) logé dans la roue dentée (36), dans lequel un élément de ressort (69) est disposé entre l'élément de boîtier (67) et l'élément de surcharge (68).

11. Lave-vaisselle à usage domestique selon la revendication 10, **caractérisé en ce que** l'élément de ressort (69) déplace l'élément de surcharge (68) de manière linéaire par rapport à l'élément de boîtier (37) et perpendiculairement à l'axe de rotation (30) de la roue dentée (36) lors d'un passage du dispositif de protection contre les surcharges (43') de l'état de couplage (Z1) à l'état de découplage (Z2).

12. Lave-vaisselle à usage domestique selon la revendication 10 ou la revendication 11, **caractérisé en ce que** l'élément de surcharge (68) est logé au moins par sections dans l'élément de ressort (69).

13. Lave-vaisselle à usage domestique selon l'une des revendications 1 à 12, **caractérisé par** un dispositif de détection (15) qui permet de détecter si le dispositif de protection contre les surcharges (43, 43') se trouve dans l'état de couplage (Z1) ou dans l'état de découplage (Z2).

14. Lave-vaisselle à usage domestique selon la revendication 13, **caractérisé en ce que** le dispositif de détection (15) détecte un courant de moteur (I) du dispositif d'entraînement (19, 19').
